# EUROPEAN PATENT SPECIFICATION

(11) **EP 3 009 847 B1**
(45) Date of publication and mention of the grant of the patent: **02.08.2017**
(21) Application number: 15188931.8
(22) Date of filing: 08.10.2015
(51) Int. Cl.: G01P 5/165, B64D 15/12, B64D 15/22, B33Y 80/00, B33Y 70/00, B64D 43/02, G01P 5/16, G01P 13/02

(54) **ONE-PIECE AIR DATA PROBE**
EINTEILIGE LUFTDATENSONDE
SONDE DE DONNÉES D'AIR MONOBLOC

(30) Priority: 15.10.2014 US 201414514462
(43) Date of publication of application: 20.04.2016
(73) Proprietor: Rosemount Aerospace Inc., Burnsville MN 55306-4898 (US)
(72) Inventor: WENTLAND, William Louis, Rockford, IL Illinois 61114 (US); KARLEN, Eric, Rockford, IL Illinois 61114 (US); ANDERSON, Matthew P., Burnsville, MN Minnesota 55337 (US)
(74) Representative: Leckey, David Herbert

(56) References cited:
- EP-A2- 1 275 947
- EP-A2- 1 491 900
- US-A- 3 030 807
- US-A1- 2009 255 102

## Description

### BACKGROUND OF THE INVENTION

This application relates to an air data probe for use in aircraft applications and wherein electrical heater elements are imbedded in a wall of the probe.

Modern aircraft are becoming more sophisticated and require precise information. Controls for modern aircraft must know an air speed with accuracy. As part of determining the air speed, an air data probe is often mounted at a location on an aircraft body.

Modern air data probes take in air and evaluate that air to determine air speed and other parameters (as examples, altitude, angle of attack, angle of side slip) of an aircraft carrying the probe. One challenge is that aircraft often operate in extremely cold environments.

As such, air data probes are often provided with heater elements. Standard air data probes as manufactured will typically include an outer wall formed of a metal. The heater elements are then mounted within an inner periphery of that wall. Of course, mounting the heater elements within the inner periphery spaces them away from the outer surface of the air data probe.

It has been proposed to cast heater elements within a body of an air data probe. However, casting processes may result in degradation of the heater assembly. In addition, a dielectric material and casing is often placed between the electric heater element and the material forming the wall separated by the casing. The dielectric material and casing may also be subject to degradation from casting processes. EP 1275947 A2 describes a method of generating, for an aircraft, a total air temperature compensated for recovery or de-icing heater errors and a multi-funtion probe for air data sensing. It discloses the preamble of independent product claim 11 and is considered being the closest prior art.

### SUMMARY OF THE INVENTION

A method (claim 1) of forming an air data probe comprises the steps of (1) utilizing an additive manufacturing technique to lay down a portion of a wall of an air data probe, and (2) also utilizing an additive manufacturing technique to lay down a conductive portion of a heater element within the wall. An air data probe (claim 11) is also disclosed.

These and other features may be best understood from the following drawings and specification.

### BRIEF DESCRIPTION OF THE DRAWINGS

Figure 1 shows an air data probe mounted on an aircraft.
Figure 2A shows a first step in forming the air data probe.
Figure 2B shows a subsequent step.
Figure 2C shows a portion of the air data probe as manufactured.

### DETAILED DESCRIPTION

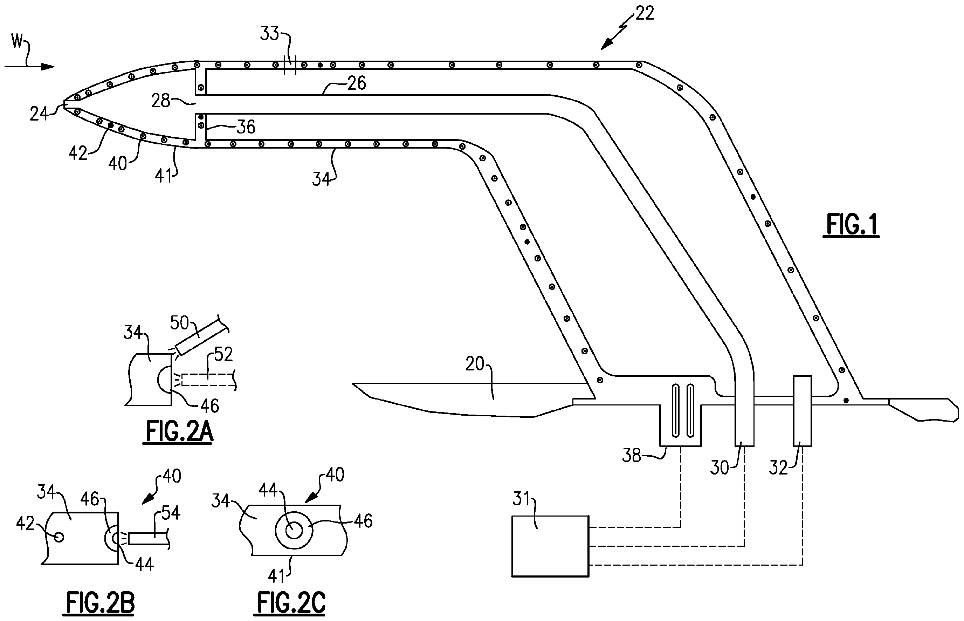

Figure 1 shows an aircraft body 20, schematically. An air data probe 22 is mounted to the aircraft body. The air data probe 22 has a tap 24 at a forward end. The tap 24 will sample a portion of air W as the aircraft moves through the air. The tapped air will move into an opening 28 in a tube 26, and to a pitot pressure tap 30. Pressure tap 30 is shown communicating with a control 31. Control 31 will translate the tapped pressure into an air speed of the aircraft body 20. In addition, a static pressure tap 32 is utilized and communicates to the control 31. A hole 33 provides a tap to communicate air to static pressure tap 32. The details for translating tapped pressures into an air speed may be as known and form no portion of this disclosure.

A wall 34 of the air data probe is formed, as is a forward boss 36 receiving the tube 26. An electric heater connection 38 communicates to the control 31 and provides electric power to heater elements 40. In addition, sensors 42 may be imbedded within the wall 34. The sensors 42 may be temperature sensors, as an example. The temperature sensors 42 also communicate back to the control 31. The heater elements 40 are provided with electric current to generate heat and are imbedded within the wall 34. As such, the heater elements 40 are closer to an outer periphery 41 of the air data probe 22 than has been the case in the traditional air data probe.

The sensor 42 will communicate a temperature of the wall 34, as an example, to the control 31. The control 31 can, thus, control the current supplied to the heater element 40 based upon the sensed temperature and to ensure proper operation.

Figures 2A and 2B show a method of forming the air data probe 22. So-called "additive manufacturing" techniques are utilized to form the air data probe 22 and the embedded elements 40 and sensors 42. While any number of additive manufacturing techniques may be utilized, additive manufacturing techniques as suggested to form structure of appropriate wall material that is a good temperature conductor, as well as depositing the electric elements 40 and 42. Typically, metal is utilized for wall 34 and boss 36, as well as the electric components 40 and 42.

Laser engineered net shaping additive manufacturing techniques may be utilized. Laser sintering or powder feed technology may be utilized. Alternatively, a laser may be utilized to melt wire to form the electric conductor and sensor portions 40 and 42. Other additive manufacturing techniques, such as electron beam melting may also be used.

As shown in Figure 2A, a portion of the wall 34 is being formed by an additive manufacturing tool 50. Another tool 52 is shown in phantom and deposits a dielectric material 46. The tools 50 and 52 may be a single additive manufacturing tool and simply, the feed to a laser, which forms a portion of these tools, may differ when the wall 34 is being formed as compared to the material 46. The dielectric material insulates a conductor portion of the heater element 40.

As shown in Figure 2B, another tool 54 may deposit a conductor portion 44 of the heater element 40. Again, a laser may be utilized as a portion of the tool 54 and a single laser may be utilized for each of the tools 50, 52 and 54, with the feeds to the lasers being simply changed between materials.

In addition, as shown in Figure 2B, the sensor 42 may have previously been formed in a similar manner.

Figure 2C shows the final wall 34 having the heater element 40 with an inner electric conductor portion 44 and a dielectric material 46. The dielectric material serves to electrically insulate the conductor 44, but preferably is a good transmitter of heat, such that the heat from the conductor 44 reaches the outer surface 41 of the wall 34. Tube 26 and boss 36 are formed in a similar manner, and from the same material as wall 34.

With the disclosed embodiment, a one-piece air data probe provides better operational features than the prior art.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A method of forming an air data probe (22) **characterized by** comprising the steps of:
(a) utilizing an additive manufacturing technique to lay down a portion of a wall (34) of an air data probe (22); and
(b) also utilizing an additive manufacturing technique to lay down a conductive portion (44) of a heater element (40) within the wall (34).

2. The method as set forth in claim 1, wherein the method further includes the step of utilizing an additive manufacturing technique to lay down a dielectric material (46) that insulates the conductive portion (44) from the wall (34).

3. The method as set forth in claim 2, wherein said wall (34) is formed of a metal.

4. The method as set forth in any preceding claim, wherein sensors (42) are also formed within said wall by additive manufacturing techniques.

5. The method as set forth in any preceding claim, wherein a tube (26) is also formed to communicate a tapped air pressure from a forward end of said air data probe (22) to a location outwardly of said air data probe (22).

6. The method as set forth in claim 5, wherein said tube (26) is also formed by additive manufacturing techniques.

7. The method as set forth in claim 6, wherein said tube (26) is formed of the same material as said wall (34).

8. The method as set forth in any preceding claim, wherein said additive manufacturing techniques include the use of a laser.

9. The method as set forth in claim 8, wherein said laser utilizes laser powder feed technology.

10. The method as set forth in any preceding claim, wherein sensors (42) are also formed within said wall (34) by additive manufacturing techniques.

11. An air data probe (22) comprising:
a wall (34), a boss (36) extending across a hollow interior of said wall (34), an opening (24) formed at a forward end of said wall (34) to provide an air tap, and said opening (34) communicating to an opening in a tube (26) mounted within said boss (36), and said tube (26) extending to an outer end of said air data probe (22); and
at least said wall (34) being formed with a heater element (40) and at least one temperature sensor (42), with said temperature sensor (42) and said heater element (40) being imbedded in said wall (34), and **characterized by** said air data probe (22), including said sensors (42) and said heater elements (40) being formed by additive manufacturing techniques.

12. The air data probe as set forth in claim 11, wherein said heater elements (40) are provided with an insulating dielectric material (46) to insulate a conductor portion (44) of said heater element (40) from said wall (34).

13. The air data probe as set forth in claim 11 or 12, wherein said wall (34), said boss (36) and said tube (26) are formed of a metal.

## Patentansprüche

1. Verfahren zum Bilden einer Luftdatensonde (22), **dadurch gekennzeichnet, dass** es die folgenden Schritte umfasst:
(a) Anwenden einer additiven Herstellungstechnik zum Festlegen eines Abschnitts einer Wand (34) einer Luftdatensonde (22); und
(b) ebenfalls Anwenden einer additiven Herstellungstechnik zum Festlegen eines leitenden Abschnitts (44) eines Heizelements (40) in der Wand (34).

2. Verfahren nach Anspruch 1, wobei das Verfahren weiter den Schritt des Anwendens einer additiven Herstellungstechnik zum Festlegen eines dielektrischen Materials (46), das den leitenden Abschnitt (44) von der Wand (34) isoliert, beinhaltet.

3. Verfahren nach Anspruch 2, wobei die Wand (34) aus einem Metall gebildet wird.

4. Verfahren nach einem vorhergehenden Anspruch, wobei Sensoren (42) ebenfalls durch additive Herstellungstechniken in der Wand gebildet werden.

5. Verfahren nach einem vorhergehenden Anspruch, wobei auch eine Röhre (26) gebildet wird, um einen angezapften Luftdruck von einem vorderen Ende der Luftdatensonde (22) zu einer Stelle außerhalb der Luftdatensonde (22) zu übertragen.

6. Verfahren nach Anspruch 5, wobei die Röhre (26) ebenfalls durch additive Herstellungstechniken gebildet wird.

7. Verfahren nach Anspruch 6, wobei die Röhre (26) aus dem gleichen Material wie die Wand (34) gebildet wird.

8. Verfahren nach einem vorhergehenden Anspruch, wobei die additiven Herstellungstechniken die Verwendung eines Lasers beinhalten.

9. Verfahren nach Anspruch 8, wobei der Laser Laserpulverzufuhrtechnologie anwendet.

10. Verfahren nach einem vorhergehenden Anspruch, wobei Sensoren (42) ebenfalls durch additive Herstellungstechniken in der Wand (34) gebildet werden.

11. Luftdatensonde (22), umfassend:
eine Wand (34), einen Buckel (36), der sich über einen hohlen Innenraum der Wand (34) erstreckt, eine Öffnung (24), die an einem vorderen Ende der Wand (34) gebildet ist, um eine Luftanzapfung bereitzustellen, und wobei die Öffnung (34) mit einer Öffnung in einer Röhre (26) verbunden ist, die in dem Buckel (36) angebracht ist, und sich die Röhre (26) zu einem äußeren Ende der Luftdatensonde (22) erstreckt; und
mindestens eine Wand (34), die mit einem Heizelement (40) und mindestens einem Temperatursensor (42) gebildet wird, wobei der Temperatursensor (42) und das Heizelement (40) in die Wand (34) eingebettet sind, und **gekennzeichnet dadurch, dass** die Luftdatensonde (22) mit den Sensoren (42) und den Heizelementen (40) durch additive Herstellungstechniken gebildet werden.

12. Luftdatensonde nach Anspruch 11, wobei die Heizelemente (40) mit einem isolierenden dielektrischen Material (46) bereitgestellt werden, um einen Leitabschnitt (44) des Heizelements (40) von der Wand (34) zu isolieren.

13. Luftdatensonde nach Anspruch 11 oder 12, wobei die Wand (34), der Buckel (36) und die Röhre (26) aus einem Metall gebildet werden.

## Revendications

1. Procédé de formation d'une sonde de données d'air (22) **caractérisé en ce qu'**il comprend les étapes consistant à :
(a) utiliser une technique de fabrication supplémentaire pour installer une partie d'une paroi (34) d'une sonde de données d'air (22) ; et
(b) utiliser également une technique de fabrication supplémentaire pour installer une partie conductrice (44) d'un élément de chauffage (40) dans la paroi (34).

2. Procédé selon la revendication 1, dans lequel le procédé comprend en outre l'étape d'utilisation d'une technique de fabrication supplémentaire pour installer un matériau diélectrique (46) qui isole la partie conductrice (44) par rapport à la paroi (34).

3. Procédé selon la revendication 2, dans lequel ladite paroi (34) est formée d'un métal.

4. Procédé selon une quelconque revendication précédente, dans lequel des capteurs (42) sont également formés dans ladite paroi grâce à des techniques de fabrication supplémentaires.

5. Procédé selon une quelconque revendication précédente, dans lequel un tube (26) est également formé pour communiquer une pression d'air avec prise depuis une extrémité avant de ladite sonde de données d'air (22) jusqu'à un emplacement vers l'extérieur de ladite sonde de données d'air (22).

6. Procédé selon la revendication 5, dans lequel ledit tube (26) est également formé grâce à des techniques de fabrication supplémentaires.

7. Procédé selon la revendication 6, dans lequel ledit tube (26) est formé du même matériau que ladite paroi (34).

8. Procédé selon une quelconque revendication précédente, dans lequel lesdites techniques de fabrication supplémentaires comprennent l'utilisation d'un laser.

9. Procédé selon la revendication 8, dans lequel ledit laser utilise une technologie d'alimentation de poudre laser.

10. Procédé selon une quelconque revendication précédente, dans lequel des capteurs (42) sont également formés dans ladite paroi (34) grâce à des techniques de fabrication supplémentaires.

11. Sonde de données d'air (22) comprenant :
une paroi (34), un bossage (36) s'étendant à travers un intérieur creux de ladite paroi (34), une ouverture (24) formée au niveau d'une extrémité avant de ladite paroi (34) pour fournir une prise d'air, et ladite ouverture (34) communiquant avec une ouverture dans un tube (26) monté dans ledit bossage (36), et ledit tube (26) s'étendant vers une extrémité extérieure de ladite sonde de données d'air (22) ; et
au moins ladite paroi (34) étant formée avec un élément de chauffage (40) et au moins un capteur de température (42), ledit capteur de température (42) et ledit élément de chauffage (40) étant encastrés dans ladite paroi (34), et **caractérisée en ce que** ladite sonde de données d'air (22), comprenant lesdits capteurs (42) et lesdits éléments de chauffage (40), est formée grâce à des techniques de fabrication supplémentaires.

12. Sonde de données d'air selon la revendication 11, dans laquelle lesdits éléments de chauffage (40) sont dotés d'un matériau diélectrique isolant (46) pour isoler une partie conductrice (44) dudit élément de chauffage (40) par rapport à ladite paroi (34).

13. Sonde de données d'air selon la revendication 11 ou 12, dans laquelle ladite paroi (34), ledit bossage (36) et ledit tube (26) sont formés d'un métal.
